## Europäisches Patentamt
## European Patent Office
## Office européen des brevets

(19)

(11) Veröffentlichungsnummer: **0 240 881 B1**

(12) # EUROPÄISCHE PATENTSCHRIFT

(45) Veröffentlichungstag der Patentschrift: **04.09.91**

(51) Int. Cl.⁵: **G01N 15/08**

(21) Anmeldenummer: **87104640.5**

(22) Anmeldetag: **28.03.87**

(54) **Prüfvorrichtung zum Prüfen der Luftdurchlässigkeit von flächigen Gegenständen, insbesondere von Filzen und Sieben für der Papierherstellung dienenden Maschinen oder Anlagen.**

(30) Priorität: **05.04.86 DE 3611458**

(43) Veröffentlichungstag der Anmeldung:
**14.10.87 Patentblatt 87/42**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
**EP-A- 0 096 311**
**US-A- 4 311 037**

(73) Patentinhaber: **Württembergische Filztuchfabrik D. Geschmay GmbH
Im Pfingstwasen
W-7320 Göppingen(DE)**

(72) Erfinder: **Schlipf, Engelbert, Prof. Dipl.-Ing.
Albert Schweitzer-Strasse 23
W-7913 Senden(DE)**

(74) Vertreter: **Becker, Maria, Dipl.-Phys.
Auf dem Haigst 29
W-7000 Stuttgart 70(DE)**

**Beschreibung**

Die Erfindung betrifft eine Vorrichtung zum Prüfen der Luftdurchlässigkeit von flächigen Gegenständen - nachfolgend Meßobjekt genannt -, vorzugsweise von Filzen und Sieben für der Papierherstellung dienende Maschinen oder Anlagen mit den Merkmalen des Oberbegriffs von Anspruch 1.

Eine Vorrichtung dieser Art ist aus der EP-Patentanmeldung 0 096 311 bekannt. Sie ist als fahrbares Gerät ausgebildet, dessen Meßkanal in zwei zueinander koaxiale Kanalteilstücke aufgeteilt ist, die zwischen sich einen Meßspalt definieren, in welchen das Meßobjekt, beispielsweise eine Materialbahn in Form eines Gewebes, Siebes oder Filzes, eingeführt und anschließend zwischen beiden Kanalteilstücken festgeklemmt werden muß.

Bei dieser Prüfvorrichtung handelt es sich um eine technisch aufwendige Konstruktion, die zur Erstellung von Luftdurchlässigkeitsprofilen an einer Vielzahl von Stellen des Meßobjekts anzusetzen ist, was sich nur mit entsprechend großem Zeitaufwand bewerkstelligen läßt. Das Meßobjekt ist hierbei deshalb festzuklemmen, um eine möglichst gleichförmige Durchströmung desselben zu erzielen und gegen Leckverluste weitgehend abzudichten. Durch die Anordnung des Ringkanals mit gleichem Luftdruck werden dabei noch aufgrund der Oberflächenstruktur von Meßobjekten vorhandene Leckverluste weitgehend vermieden.

Der Erfindung liegt die Aufgabe zugrunde, eine Prüfvorrichtung mit den im Oberbegriff des Anspruchs 1 aufgeführten Merkmalen anzugeben, die es gestattet, die Luftdurchlässigkeit an unterschiedlichen Bereichen eines Meßobjekts rasch und einfach ermitteln zu können und hierbei einen großen Meßbereich von mindestens 1:50 bei guter Meßgenauigkeit vorteilhaft zu erreichen. Dabei soll sich die Prüfvorrichtung leicht und problemlos handhaben lassen, sowie für eine Vielzahl unterschiedlich durchlässiger Objekte geeignet und örtlich verschiebbar sein, um verschiedene Durchlässigkeitsprofile erstellen zu können. Schließlich soll die Prüfvorrichtung auch bei sich langsam bewegenden Prüfobjekten einsetzbar sein.

Diese Aufgabe wird erfindungsgemäß durch die kennzeichnenden Merkmale des Anspruchs 1 gelöst.

Luftdurchlässigkeitsprüfungen sind mit Hilfe der erfindungsgemäßen Prüfvorrichtung möglich, ohne das Meßobjekt zwischen Kanalteilstücken ihres Luftmeßkanals festzuklemmen; vielmehr gestattet es die Erfindung, diese einseitig an das Meßobjekt anzusetzen, was den Vorteil bietet, daß sie auch für solche Meßobjekte eingesetzt werden kann, die nur von einer Oberflächenseite zugänglich sind und/oder sich kontinuierlich bewegen.

Die Prüfvorrichtung läßt sich konstruktiv so aufbauen, daß sie sich durch ein geringes Gewicht auszeichnet und demgemäß manuell leicht handhaben läßt. Dies bietet den Vorteil, daß mit Hilfe der Prüfvorrichtung auch kontinuierliche Messungen bei gleichzeitiger Verschiebung der Prüfvorrichtung relativ zu einem insbesondere bewegten Meßobjekt zur Erstellung von Längsprofil- und Querprofilmessungen durchführbar sind.

Dabei wird die Druckdifferenz bei unterschiedlichen Gewebedurchlässigkeiten selbsttätig auf den Sollwert eingestellt und gehalten. Auch ist die Nachbildung der natürlichen Durchströmung des Meßobjekts infolge der Abschirmung der Luftströmung im Meßkanal am Meßobjekt durch die im Ringkanal herrschende Luftströmung insofern sehr vorteilhaft, als dadurch die den Meßkanal durchströmende Luft gegen äußere Einflüsse abgeschirmt und eine unvermeidliche Leckluftmenge bereitgestellt wird.

Mit Hilfe der Prüfvorrichtung läßt sich somit kurzfristig die Luftdurchlässigkeit von Filzen, Sieben, Geweben und dgl. Materialbahnen ermitteln. Diese Luftdurchlässigkeitseigenschaften beeinflussen nachhaltig eine Reihe von Betriebswerten der mit diesen Filzen oder Sieben betriebenen Maschinen.

Vorteilhafte Ausgestaltungen der Erfindung sind Gegenstand der Merkmale von Unteransprüchen.

In der Zeichnung ist ein bevorzugtes Ausführungsbeispiel einer erfindungsgemäßen Prüfvorrichtung dargestellt. Es zeigen:

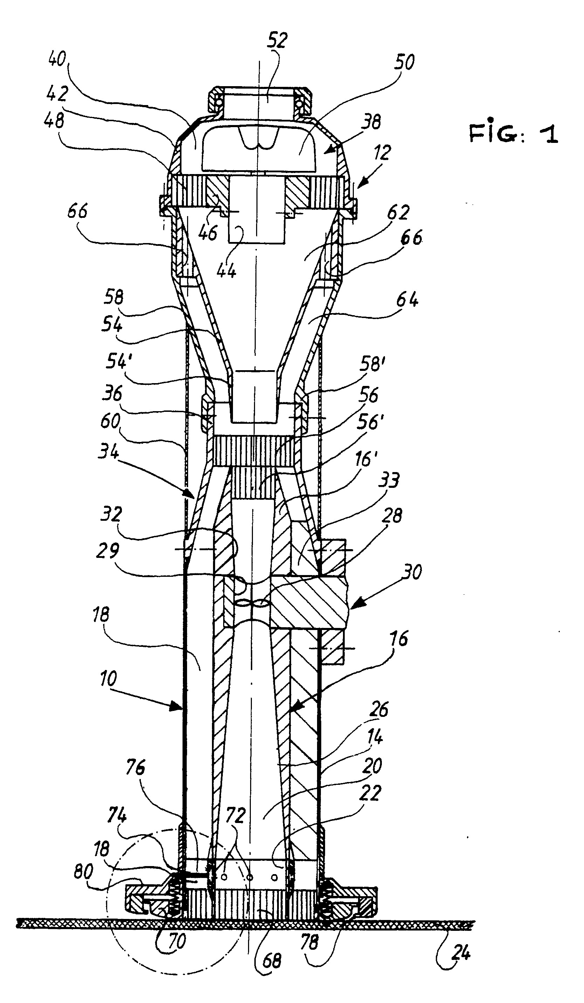

Figur 1    einen Längsschnitt der Prüfvorrichtung;

Figur 2    einen in Fig. 1 durch einen strichpunktierten Kreis angedeuteten Ausschnitt der Prüfvorrichtung in vergrößertem Maßstab;

Figur 3    den Ausschnitt gemäß Figur 2 in alternativer Ausführungsform.

Die Prüfvorrichtung ist als Handgerät ausgelegt. Sie kann selbstverständlich auch als eine Zusatzvorrichtung ausgebildet sein, die beispielsweise an eine Produktionsmaschine zur Messung von Luftdurchlässigkeitsprofilen einer zu prüfenden Gewebebahn vorgesehen sein kann. Sie weist einen als Ganzes mit 10 bezeichneten Meßtubus mit einem auf diesen aufgesetzten Gebläseaufsatz 12 auf. Der Meßtubus 10 ist mit einem zylindrischen Tubusmantel 14 ausgestattet, der zusammen mit einem in diesen koaxial eingebauten Manteleinsatz 16 einen Ringkanal 18 und einen inneren Meßkanal 20 definiert.

Während der Ringkanal 18 einen in Abschnitten zylindrischen Ringraum bildet, weist der Meßkanal 20 lediglich ein mindestens 20 mm langes unteres, zylindrisches Kanalteilstück 22 auf, dessen Innenumfang einen Meßfleck beispielsweise auf einer Gewebebahn 24 einer Papiermaschine umgrenzt, in dessen Bereich die Luftdurchlässigkeit der Gewebebahn 24 bestimmt werden soll.

Das zylindrische Kanalteilstück 22 geht in ein sich nach oben konisch verjüngendes Kanalteilstück 26 über, wobei in einem sich anschließenden zylindrischen Kanalabschnitt 29 ein Flügelrad 28 einer Flügelrad-Anemometersonde 30 gelagert ist.

An den Kanalabschnitt 29 schließt sich nach oben ein sich geringfügig konisch erweiternder Kanalabschnitt 32 an.

Das untere zylindrische Kanalteilstück 22 des Meßkanals 20 besitzt bevorzugt einen Durchmesser von 35 mm, wodurch der sich daraus ergebende Meßfleck in seiner Größe optimal zur Beurteilung des Meßobjekts ist. Das sich an das Kanalteilstück 22 nach oben anschließende Kanalteilstück 26 verengt sich bis zum Flügelrad 28 bis auf einen Durchmesser von vorzugsweise 18,2 mm. Das Durchmesserverhältnis 35 mm : 18,2 mm schafft optimale Bedingungen für einen großen Meßbereich unter Berücksichtigung der Ansprechempfindlichkeit und maximalen Luftgeschwindigkeit für die Flügelrad-Anemometersonde 30, insbesondere für durch dichte Filze und offene Trockensiebe gebildete Meßobjekte.

Um im Hinblick auf die radial nach außen geführte Flügelrad-Anemometersonde 39 innerhalb des Ringkanals 18 Strömungsablösungen bei Umströmung der Flügelrad-Anemometersonde 30 zu verhindern, ist für sie im Ringkanal 18 eine strömungsgünstige Verkleidung 33 vorgesehen. Damit die den Ringkanal 18 durchströmende Luftmenge in diesem gleichmäßig verteilt ist, ist zumindest dieser diametral gegenüberliegend ein gleichartiges Gegenstück vorgesehen, das nicht dargestellt ist.

Zweckmäßig sind aus dem gleichen Grunde innerhalb des Ringkanals 18 um 90° versetzt noch zwei weitere, Luftleitelemente bildende Verkleidungen vorgesehen.

Auf den Tubusmantel 14 ist ein Aufnahmekopf 34 aufgesetzt, in welchen der Manteleinsatz 16 mit seinem oberen Endstück 16' hineinragt. In diesem Bereich verjüngt sich der Aufnahmekopf 34 nach oben und an dieses Teilstück schließt sich ein hohlzylindrisches, einen Aufsteckkragen 36 bildendes Kopfteilstück an. Auf dieses ist der Gebläseaufsatz 12 aufgesetzt. Dieser enthält in seinem oberen Bereich ein Radialgebläse 38, das sich innerhalb einer Luftleitkammer 40 befindet, die durch eine auf den Gebläseaufsatz 12 aufgesetzte Haube 42 gebildet ist. Das Radialgebläse 38 umfaßt einen Antriebsmotor 44, der als geregelter Gleichstrommotor oder phasenanschnittgesteuerter Wechselstrommotor ausgebildet sein kann. Dieser ist in einem zum Innenkanal 20 koaxialen Trägerring 46 gehalten, der in einem beispielsweise durch ein Wabengitter gebildeten Strömungsgleichrichter 48 gehalten ist. Auf der Welle des Antriebsmotors 44 sitzt ein sich oberhalb des Strömungsgleichrichters 48 befindendes Radialgebläserad 50, das über eine mittlere Einlaßöffnung 52 der Haube 42 Luft ansaugt und durch den Strömungsgleichrichter 48 hindurchdrückt. An letzteren schließt sich ein sich nach unter konisch verjüngender Einsatz 54 an, dessen Endstück 54' zylindrisch ausläuft und in den Aufsteckkragen 36 hineinragt. Zwischen dem oberen Endstück 16' des Manteleinsatzes 16 und dem Endstück 54' des Einsatzes 54 befindet sich im Aufsteckkragen 36 ein weiterer, vorzugsweise durch ein Wabengitter gebildeter Strömungsgleichrichter 56, der sich mit einem Teilstück 56' in das obere Ende des Innenkanals 20 hineinerstreckt. Hierbei ist zumindest letzteres (56') meßtechnisch notwendig, um eine drallfreie Anströmung des Flügelrades 28 sicherzustellen.

Der Einsatz 54 ist im Radialabstand von einem sich nach unten gleichfalls konisch verjüngenden Gehäuseteil 58 um geben, dessen ringförmiges Endstück 58' auf den Aufsteckkragen 36 aufgesteckt und auf diesem befestigt ist. Zwischen Befestigungskopf 34 und Gehäuseteil 58 erstreckt sich ein zylindrisches Griffteil 60.

Der Einsatz 54 bildet einen sich nach unten im Querschnitt verengenden inneren Strömungskanal 62, während Einsatz 54 und Gehäuseteil 58 zusammen einen sich nach unten konisch verjüngenden Ringkanal 64 bilden. Dieser ist hierbei über einen Kranz von im oberen Teil des Einsatzes 54 vorgesehenen achsparallelen Verbindungsöffnungen 66 mit dem Strömungskanal 62 verbunden, wobei der durch das Radialgebläse 38 erzeugte Luftstrom durch den Strömungsgleichrichter 48 so ausgerichtet wird, daß dieser entsprechend den gegebenen Strömungsquerschnitten im zylindrischen Kanalteilstück 22 und in dem dieses umgebenden Ringkanalteilstück 18' aufgeteilt wird. Das Strömungsquerschnittsverhältnis von Meßkanal 20 zu Ringkanal 18 ist über den gesamten Strömungsweg ab dem zylindrischen Endstück 54' des Manteleinsatzes 16 bis zur Kanalmündung im wesentlichen gleich gehalten und beträgt vorzugsweise 2,33 : 1. Damit ist sichergestellt, daß die den Meßkanal 20 durchströmende Luftmenge ausreicht, um die den Meßkanal 20 durchströmende Luft gegen äußere Einflüsse abzuschirmen und eine unvermeidliche Leckluftmenge bereitzustellen.

Vorzugsweise ist das auf das Meßobjekt 24 aufzusetzende untere Ende des Meßkanals 20 ebenso wie der Ringkanal 18 in diesem Bereich mit einem Strömungsgleichrichter 68 versehen, durch den die Gleichrichtung der austretenden Luftströmung und eine günstige Druckverteilungswirkung zur radialen Abdichtung verbessert wird. In diesem Bereich ist die Wandstärke zwischen Meßkanal 20 und Ringkanal 18 bevorzugt 1 mm. Sie sollte auf jeden Fall kleiner als 5 mm sein, damit die Abschirmungswirkung der Ringkanalströmung auf die Meßkanalströmung am Meßobjekt gewährleistet ist.

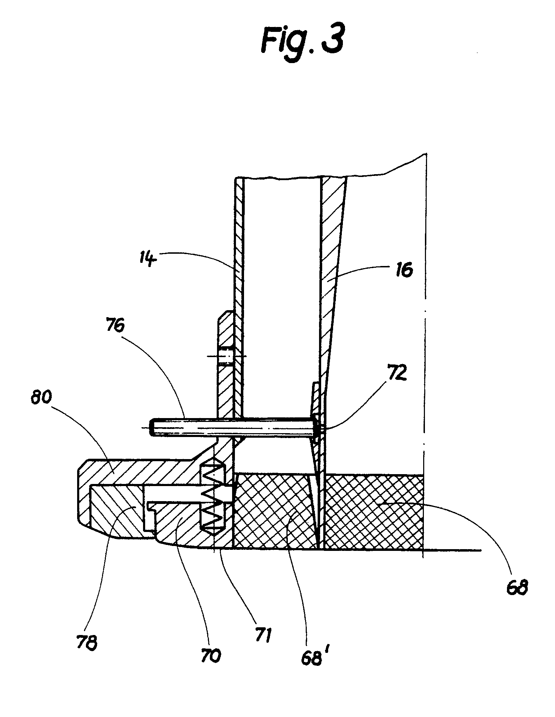

Bezüglich der Anordnung des im unteren Ende des Ringkanals 18 vorzusehenden Teils des Strömungsgleichrichters 68 kann die Konstruktion vorzugsweise so getroffen sein, dass dieser mit 68' bezeichnete Strömungsgleichrichterteil, wie Fig. 3 zeigt, am Innenumfang des Kanalwandungsabschnittes 70 beispielsweise durch Ankleben derart befestigt ist, dass dieser mit der unteren Stirnfläche 71 des Kanalwandungsabschnittes 70 plan abschliesst. Damit ist sichergestellt, dass dieser Strömungsgleichrichterteil 68' stets auf dem Gewebe aufliegt.

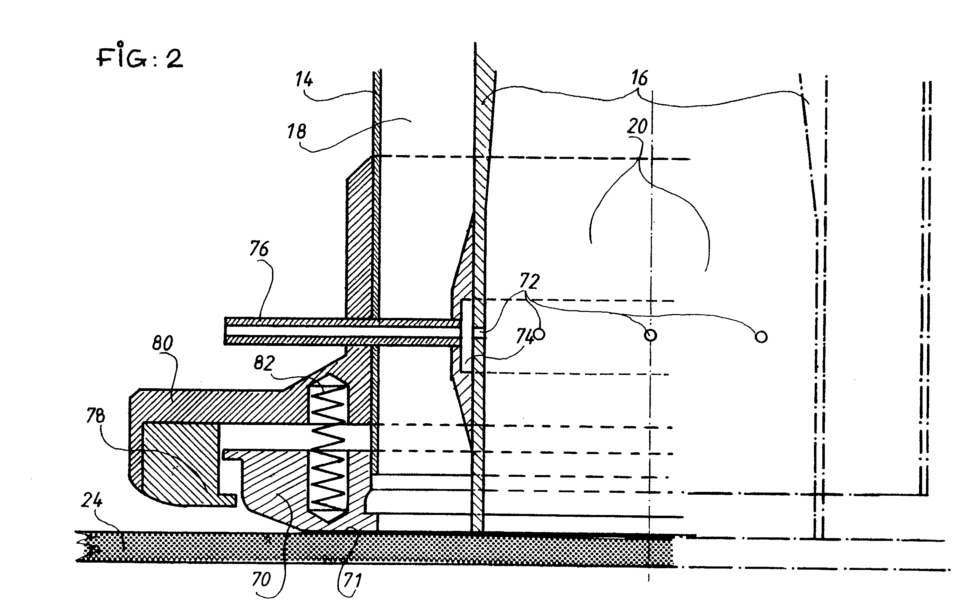

Das untere Mantelende des Meßkanals 20 steht über das untere Endstück des zylindrischen Tubusmantels 14 vor, wobei das untere Ende des Ringkanals 18, wie Fig. 2 zeigt, durch einen axial beweglichen, abgefederten Abdichtring 70 gebildet ist, der mit solchem Radialspiel auf dem Tubusmantel 14 sitzt, dass auch bei Schrägstellung der Prüfvorrichtung auf dem Meßobjekt 24 eine einwandfreie Anlage der unteren Ringfläche 71 des Abdichtrings 70 auf dem Meßobjekt 24 gewährleistet ist.

Dadurch ist sichergestellt, dass schräges Aufsetzen der Prüfvorrichtung von wenigen Winkelgraden zu keinen Anzeigeänderungen bzw. Meßfehlern führen kann. In einer unteren Ausgangsstellung wird der Abdichtring 70 durch einen ringförmigen Anschlag 78 fixiert, der einen Teil eines am Tubusmantel 14 befestigten Widerlagers 80 bildet, an dem sich auf die Abdichtung 70 wirkende Druckfedern 82 abstützen.

Zur Erzielung genauer Meßergebnisse ist es wesentlich, sicherzustellen, dass im Randbereich des Meßflecks nicht eine nicht definierbare Luftmenge,anstatt durch das Meßobjekt,oberhalb des Meßobjekts geleitet wird. Um dieses seitliche Abströmen von Luft zu vermeiden, ist es ferner wesentlich, dass der Radialabstand vom Meßkanal 20 zum Ringkanal 18 möglichst nur 1 bis 2 mm beträgt.

Zur Prüfung der Luftdurchlässigkeit des Meßobjekts 24 wird mit Hilfe der Prüfvorrichtung zwischen seiner Ober- und Unterseite im Bereich des Meßflecks ein genau definierter Differenzdruck,z.B. 1 m/bar bzw. 1,27 m/bar erzeugt. Die Luftmenge, die bei einem solchen Differenzdruck pro Flächeneinheit durch das Meßobjekt 24 strömt, ist abhängig von Gewebeart, Herstellung, Verschmutzung und Dehnung des Meßobjekts. Aus diesem Grunde kann die Luftdurchlässigkeit zwischen verschiedenen Meßstellen teilweise stark differieren. Im vorliegenden Falle wird knapp oberhalb des Meßobjekts 24 der Differenzdruck durch Blasen als Überdruck gegenüber der Umgebung aufgebracht und dabei die durchströmende Luftmenge gemessen, die dann dem freien Querschnitt des Meßkanals 20, dem Meßfleck, zugeordnet wird. Dieser Meßwert kann dann als Mittelwert über der aktuellen Meßfläche betrachtet werden.

Der sich im Meßkanal 20 aufbauende statische Differenzdruck wird kontinuierlich überwacht. Zu diesem Zweck sind, wie Fig. 2 zeigt, im unteren zylindrischen Endstück 22 des Meßkanals 20 am Umfang mehrere, die Wandung des Manteleinsatzes 16 durchdringende Bohrungen 72 vorgesehen, die in einen Sammelringkanal 74 einmünden. Diese Bohrungen haben einen Durchmesser von vorzugsweise 0,5 mm, maximal 1 mm. Der Sammelringkanal 74 ist über eine Verbindungsleitung 76 an eine Druckmeßdose für die Messung des statischen Differenzdrucks angeschlossen, die an die Prüfvorrichtung angebaut ist. Diese kontinuierliche Überwachung und Regelung des statischen Luftdrucks im Meßkanal 20 stellt sicher, dass bei einem eventuellen Undichtwerden des Ringkanals 18, beispielsweise durch schlechtes Ansetzen am Meßobjekt 24, die Luftmenge automatisch entsprechend dem Luftverlust gesteigert wird, so dass der Luftdruck im Bereich des Ringkanals 18 nur unwesentlich abfällt. Demgemäss wird das Radialgebläse 38 in seiner Leistung entsprechend nachgeregelt.

Dei Arbeitsweise der Prüfvorrichtung ist, kurz zusammengefasst, folgende:

Zur Ermittlung der Luftdurchlässigkeit des Meßobjekts 24 ist die Prüfvorrichtung auf dieses aufzusetzen. Der durch das Radialgebläse 38 erzeugte und die beiden Kanäle 18, 20 durchströmende Luftstrom trifft auf das Meßobjekt 24 im Bereich des Meßflecks auf und durchströmt dieses. Der Luftstrom treibt hierbei die Flügelrad-Anemometersonde 30 an. Die mißt das pro Zeiteinheit durchströmende Luftvolumen. Durch das Meßobjekt 24 wird in Abhängigkeit von seiner Durchlässigkeit und dem Durchströmungsvolumen pro Zeit- und Flächeneinheit ein Druckabfall erzeugt. Dieser Druckabfall wird durch die Regelung auf einen Sollwert, beispielsweise 1 m/bar, gehalten, indem der Luftmengenstrom entsprechend verändert wird. Solche Veränderungen werden von der Flügelrad-Anemometersonde 30 zur Auswertung festgestellt.

**Patentansprüche**

1.  Vorrichtung zum Prüfen der Luftdurchlässigkeit von flächigen Gegenständen - nachfolgend Meßobjekt (24) genannt -, vorzugsweise von Filzen und Sieben für der Papierherstellung dienende Maschinen oder Anlagen, mit einem Meßkanal (20), in welchem ein ihn durchströmender, durch ein Gebläse (38) bewirkter Luftstrom mittels einer Volumenstrommeßvorrichtung gemessen wird, der einen Meßfleck des Meßobjekts aufgrund einer zumindest zum Teil an ihm abfallenden, geregelten, konstanten Druckdifferenz durchströmt, wobei mindestens ein Längsabschnitt des Meßkanals sich innerhalb eines gleichfalls an ein Gebläse (38) angeschlossenen Ringkanals (18) befindet, dessen dem Meßobjekt benachbarte Mündung gleichfalls an das Meßobjekt ansetzbar ist, **dadurch gekennzeichnet, daß**

(a) die Prüfvorrichtung nur einseitig an das Meßobjekt (24) ansetzbar ist,

(b) die Volumenstrommeßvorrichtung ein im Meßkanal (20) angeordnetes Flügelrad (29) eines Flügelrad-Anemometers (30) aufweist,

(c) der das Flügelrad (28) aufweisende Bereich des Meßkanals (20) mit der an das Meßobjekt (24) anzulegenden Mündung des Meßkanals (20) über einen Kanalabschnitt verbunden ist, der angrenzend an diese Mündung einen zylindrischen Längsabschnitt (22) und daran anschließend einen sich so verjüngenden Längsabschnitt (26) aufweist, daß in ihm die Luftströmung ablösungsfrei strömt,

(d) stromaufwärts des Flügelrades (28) zwecks drallfreien Anströmens des Flügelrads (28) durch die Luftströmung mindestens ein Strömungsgleichrichter (56) im Meßkanal (20) angeordnet ist,

(e) dem die an das Meßobjekt (24) anzusetzende Mündung aufweisenden zylindrischen Längsabschnitt (22) des Meßkanals (20) Mittel zum Erfassen eines in ihm herrschenden statischen Druckes für die Druckdifferenzregelung zugeordnet sind,

(f) Ringkanal (18) und Meßkanal (20) so aufeinander abgestimmt sind, daß die den Ringkanal (18) durchströmende Luftmenge sowie die Strömungsgeschwindigkeit der Luft ungefähr der den Meßkanal (20) durchströmenden Luftmenge sowie der Strömungsgeschwindigkeit der Luft im Meßkanal (20) entsprechen.

2. Prüfvorrichtung nach Anspruch 1, dadurch gekennzeichnet, daß die Druckdifferenz zwischen dem erfaßten statischen Druck in dem genannten zylindrischen Längsabschnitt (22) des Meßkanals (20) und dem Gesamtdruck der Umgebungsatmosphäre geregelt wird.

3. Prüfvorrichtung nach Anspruch 1 oder 2, dadurch gekennzeichnet, daß der sich verjüngende Längsabschnitt (26) des Meßkanals (20) konisch ist und sein von Wand zu Wand gemessener Öffnungswinkel maximal 18°, vorzugsweise 10° bis 15°, beträgt.

4. Prüfvorrichtung nach einem der vorhergehenden Ansprüche, dadurch gekennzeichnet, daß das Verhältnis des lichten Querschnitts des zylindrischen Längsabschnitts (22) des Meßkanals (20) zum Querschnitt des Meßkanals (20) in Höhe des Flügelrades (28) 1,2 bis 3,5, vorzugsweise 1,8 bis 2,0, beträgt.

5. Prüfvorrichtung nach einem der vorhergehenden Ansprüche, dadurch gekennzeichnet, daß der zylindrische Längsabschnitt (22) des Meßkanals (20), welcher die an das Meßobjekt (24) anzusetzende Mündung aufweist, mindestens 20 mm lang ist.

6. Prüfvorrichtung nach einem der vorhergehenden Ansprüche, dadurch gekennzeichnet, daß der statische Druck im zylindrischen Meßkanal-Längsabschnitt (22), der die an das Meßobjekt (24) anzusetzende Mündung aufweist, mittels mehrerer, in einem Sammelringkanal (74) mündenden, demselben Querschnitt des Meßkanals (20) zugeordneten Bohrungen (72) in der Wandung des Meßkanal-Längsabschnitts (22) entnommen wird.

7. Prüfvorrichtung nach einem der vorhergehenden Ansprüche, dadurch gekennzeichnet, daß in dem zylindrischen Meßkanal-Längsabsschitt (22), der die an das Meßobjekt (24) anzusetzende Mündung aufweist, ein Strömungsgleichrichter (68) vorgesehen ist, der im Falle einer Saugströmung stomaufwärts und im Falle einer Blasströmung stromabwärts der Fühlstelle oder den Fühlstellen, an der oder denen der statische Druck in diesem zylindrischen Längsabschnitt (22) erfaßt wird, angeordnet ist.

8. Prüfvorrichtung nach Anspruch 8, dadurch gekennzeichnet, daß ein den Außenrand der Mündung des Ringkanals (18) bildender Wandungsabschnitt (70) des Ringkanals (18) beweglich angeordnet ist, so daß er auch bei leichter Schrägstellung der Mündung des Meßkanals (20) zum Meßobjekt (24) vollständig an das Meßobjekt (24) zur umfangsseitigen Abdichtung anlegbar ist.

9. Prüfvorrichtung nach Anspruch 8, dadurch gekennzeichnet, daß das Verhältnis des lichten Querschnitts der zur Anlage an das Meßobjekt (24) bestimmten Mündung des Ringkanals (18) zum lichten Querschnitt der entsprechenden Mündung des Meßkanals (20) größer als 0,5, vorzugsweise größer als 1,0, ist.

10. Prüfvorrichtung nach Anspruch 8 oder 9, dadurch gekennzeichnet, daß im Ringkanal (18) ihn in Längskanäle unterteilende, sich axial und radial erstreckende Trennwände (33) angeordnet sind, vorzugsweise vier in Winkelmittenabständen von 90° zueinander winkelversetzt angeordnete Trennwände (33).

11. Prüfvorrichtung nach Anspruch 10, dadurch gekennzeichnet, daß die Wandstärke der den Meßkanal (20) von dem oder den luftführenden Bereich bzw. Bereichen des Ringkanals (18) trennenden Meßkanalumfangswandung auf einem an der Mündung des Meßkanals (20) beginnenden Längsbereich von mindestens 10 mm des zylindrischen Längsabschnitts (22) des Meßkanals (20) maximal 4 mm, vorzugsweise weniger als 2 mm, beträgt.

12. Prüfvorrichtung nach einem der vorhergehenden Ansprüche, dadurch gekennzeichnet, daß das Gebläse ein Radialgebläse (38) ist.

13. Prüfvorrichtung nach Anspruch 12, dadurch gekennzeichnet, daß das Radialgebläse (38) ein frei in eine Luftleitkammer (40) ausblasendes Radialgebläse (50) aufweist, welche Luftleitkammer (40) die Luftströmung in axiale Richtung umlenkt, und daß stromabwärts dieser Luftleitkammer (40) und noch stromaufwärts des Flügelrades (28) des Flügelrad-Anemometers (30) mindestens ein Strömungsgleichrichter (48) zum Herbeiführen drallfreier Luftströmung angeordnet ist.

14. Prüfvorrichtung nach Anspruch 13, dadurch gekennzeichnet, daß der genannte Strömungsgleichrichter (48) den Antriebsmotor (44) des Radialgebläses (38) umfaßt und trägt, so daß keine die Luftströmung störenden Tragstege für den Antriebsmotor (44) vorhanden sind.

15. Prüfvorrichtung nach einem der vorhergehenden Ansprüche 8 bis 14, dadurch gekennzeichnet, daß dem Strömungsgleichrichter (48) des Radialgebläses (38) ein sich in Strömungsrichtung der Luft trichterförmig verjüngender Strömungskanal (62) nachgeordnet ist, der auf mindestens einem Längsabschnitt von einem Ringkanal (64) umfaßt ist, der auch von vom Radialgebläse (38) geförderter Luft zur möglichst genauen Voraufteilung der aus dem Radialgebläse (38) ausströmenden Luft auf den Meßkanal (20) und den diesen auf mindestens einem Längsabschnitt umfassenden Ringkanal (18) durchströmbar ist.

16. Prüfvorrichtung nach einem der Ansprüche 12 bis 15, dadurch gekennzeichnet, daß zwischen dem Flügelrad (28) des Flügelrad-Anemometers (30) und dem Radialgebläse (38) im Meßkanal (20) ein Strömungsgleichrichter (56') angeordnet ist, wobei vorzugsweise diesem Strömungsgleichrichter (56') stromaufwärts noch ein weiterer Strömungsgleichrichter (56) vorgeschaltet ist, der von der gesamten vom Radialgebläse (38) geförderten Luft durchströmt wird.

17. Prüfvorrichtung nach einem der vorhergehenden Ansprüche, dadurch gekennzeichnet, daß sie als Handgerät ausgebildet ist.

18. Prüfvorrichtung nach einem der Ansprüche 1 bis 11 oder 17, dadurch gekennzeichnet, daß dem Meßkanal (20) und gegebenenfalls dem Ringkanal (18) ein Sauggebläse zum Hindurchsaugen von Luft durch das Meßobjekt (24) nachgeordnet ist.

19. Prüfvorrichtung nach einem der vorhergehenden Ansprüche 8 bis 18, dadurch gekennzeichnet, daß am unteren Ende des Ringkanals (18) ein Strömungsgleichrichter (68') vorgesehen ist, der am Innenumfang des den Außenrand der Mündung des Ringkanals (18) bildenden Kanalwandungsabschnittes (70) befestigt ist und mit der unteren Stirnfläche (71) dieses Kanalwandungsabschnittes (70) plan abschließt.

## Claims

1. Device to test the air permeability to of two-dimensional articles, called "test objects" in what follows, specifically felts or screens for machines or installations manufacturing paper, with a measuring channel in which air is streaming through due to the action of a blower, and with a device that measures the flow rate of air in the channel, with the air stream going through a measuring area of the test object as a result of an at least in part controlled constant pressure difference that exists at the the measuring area, with at least one longitudinal section of the measuring channel being inserted into a belt channel that, too, is connected to a blower, the belt channel having an orifice adjacent to the test object that can be also attached to the test object,

**characterized in that**

(a) the test device can only be attached on one side to the test object (24),
(b) that the device measuring the flow rate contains a fan wheel (29) of a fan-wheel anemometer (30) placed inside of the measuring channel (20),

(c) that the area of the measuring channel (20) which contains the fan wheel (28) is connected to the orifice of the measuring channel (20) that is to be attached to the test object (24) via a channel section which, adjacent to this orifice, has a cylindrical longitudinal section (22) and, adjacent to this section, a longitudinal section (26) tapered in such a manner that the air stream is non-separating,

(d) that upstream from the fan wheel (28) at least one flow rectifier (56) is placed into the measuring channel (20) in order to produce an irrotational flow incident on the fan wheel (28),

(e) that the cylindrical longitudinal section (22) which contains the orifice to be attached to the test object (24) has sensors assigned to measure a static pressure existing in the section, with the purpose of controlling the pressure difference,

(f) that belt channel (18) and measuring channel (20) are adjusted to each other in such a fashion that volume flow and flow velocity of the air flowing through the belt channel (18) are similar to volume flow and flow velocity of the air in the measuring channel (20).

2. Test device according to Claim 1, characterized in that the pressure difference between measured static pressure in the above mentioned cylindrical longitudinal section (22) of the measuring channel (20) and the total pressure of the ambient atmosphere is controlled.

3. Test device according to Claims 1 or 2, characterized in that the tapered longitudinal section (26) of the measuring channel is cone-shaped with an angular aperture, measured from wall to wall, of at most 18°, preferably between 10° and 15°.

4. Test device according to one of the above Claims, characterized in that the ratio of the interior cross section of the cylindrical longitudinal section (22) of the measuring channel (20) and the cross section of the measuring channel itself (20) at the position of the fan wheel (28) is in the range between 1.2 and 3.5, preferably between 1.8 and 2.0.

5. Test device according to one of the above Claims, characterized in that the cylindrical longitudinal section (22) of the measuring channel (20), containing the orifice to be attached to the test object (24), has a minimum length of 20 mm.

6. Test device according to one of the above Claims, characterized in that the static pressure in the cylindrical longitudinal section (22) of the measuring channel (20), containing the orifice to be attached to the test object (24), is measured by means of several boreholes (72) in the wall of the cylindrical longitudinal section (22), the boreholes opening into a collecting ring channel (74) and being assigned to the same cross section of the measuring channel (20).

7. Test device according to one of the above Claims, characterized in that the flow rectifier (68) is provided in the cylindrical longitudinal section (22) of the measuring channel (20) that contains the orifice to be attached to the test object (24), the rectifier being placed upstream in the case of a suction flow, downstream in the case of a blow flow, with respect to the sensor position or sensor positions at which the static pressure in this cylindrical longitudinal section (22) is measured.

8. Test device according to Claim 8, characterized in that a section (70) of the wall of the belt channel (18) which forms the exterior edge of the orifice of the belt channel (18) is movable so that, even in the case of a slight tilt of the orifice of the measuring channel with respect to the test object, the section can be attached to the test object (24) with complete sealing along the circumference.

9. Test device according to Claim 8, characterized in that the ratio of the inside cross section of the orifice of the belt channel (18) which is to be attached to the test object (24) and the inside cross section of the corresponding orifice of the measuring channel (20) is larger than 0.5, preferably larger than 1.0.

10. Test device according to Claims 8 or 9, characterized in that axial and radial partitions (33) are mounted in the belt channel (18) so that it is partitioned into longitudinal channels, with the partitions (33) being preferably four partitions offset with respect to each other by 90°.

11. Test device according to Claim 10, characterized in that the thickness of the circumferential wall of the measuring channel which separates the measuring channel (20) from the area of the belt channel (18), or from the several areas of the belt channel that conduct air, is, at a length of the cylindrical longitudinal section (22) of the measuring channel (20) of at least 10 mm, starting at the orifice of the measuring channel (20), at most 4 mm, preferably less than 2 mm.

12. Test device according to one of the above Claims, characterized in that the blower is a radial blower (38).

13. Test device according to Claim 12, characterized in that the radial blower (38) contains a radial fan (50) blowing freely into a routing chamber (40), the said routing chamber (40) rerouting the air flow into an axial direction, and that at least one flow rectifier (48) is positioned downstream from this routing chamber (40), but still upstream from the fan wheel (28) of the fan wheel anemometer (30), in order to produce an irrotational flow.

14. Test device according to Claim 13, characterized in that the said flow rectifier (48) contains and carries the driving motor of the radial blower (38), so that no support arms for the driving motor (44) are present that would disturb the air flow.

15. Test device according to one of the above Claims 8 through 14, characterized in that behind the flow rectifier (45) of the radial blower (38) there is a flow channel (62) which is tapered in the shape of a cone in the direction of the flow, this said flow channel (62) being surrounded by a belt channel (64) which can also conduct air originating from the radial blower (38), in order to predistribute, as accurately as possible, the air originating in the radial blower (38) between the measuring channel (20) and the belt channel (18) that surrounds the measuring channel (20) along at least one longitudinal section.

16. Test device according to one of the Claims 12 through 15, characterized in that a flow rectifier (56')is placed into the measuring channel (20) between the fan wheel (28) of the fan wheel anemometer (30) and the radial blower (38), with preferably another flow rectifier (56) being placed upstream from the rectifier (56') so that the air delivered by the radial blower (38) passes through the rectifier (56).

17. Test device according to one of the above Claims, characterized in that the device can be built as a hand-held instrument.

18. Test device according to one of the Claims 1 through 11, or 17, characterized in that behind the measuring channel (20) and, if so desired, behind the belt channel (18) a suction blower is placed that enables air to be sucked through the test object (24).

19. Test device according to one of the Claims 8 through 18, characterized in that at the lower end of the belt channel (18) a flow rectifier (68') is fastened to the interior circumference of the channel wall segment (70) that forms the outer rim of the orifice of the belt channel (18), the flow rectifier being flush with the lower face of the channel wall segment (70).

## Revendications

1. Dispositif pour contrôler la perméabilité à l'air d'objets en forme de nappe - ci-après appelés objets mesurés (24) - de préférence des feutres et tamis pour machines ou installations servant à la fabrication du papier, comportant un canal de mesure (20) dans lequel un courant d'air le parcourant, provoqué par un ventilateur (38), est mesuré au moyen d'un débitmètre volumétrique, ledit courant d'air traversant une zone de mesure de l'objet mesuré, cela sous l'effet d'une différence de pression constante, régulée, qui lui est appliquée au moins partiellement, au moins une partie de la longueur du canal de mesure se trouvant à l'intérieur d'un canal annulaire (12) également raccordé à un ventilateur (38), l'embouchure de ce canal annulaire voisine de l'objet mesuré étant également apte à être appliquée contre celui-ci, caractérisé par le fait que

    (a) le dispositif de contrôle est apte à n'être appliqué que sur un seul côté de l'objet mesuré (24),

    (b) le débitmètre volumétrique présente une rouehélice (29) d'un anémomètre à roue-hélice (30) agencée dans le canal de mesure (20),

    (c) la région du canal de mesure (20) présentant la roue-hélice (28) est reliée à l'embouchure du canal de mesure (20) destinée à être appliquée contre l'objet mesuré (24), par l'intermédiaire d'une portion de canal présentant, adjacente à cette embouchure, une portion longitudinale cylindrique (22) et, s'y raccordant, une portion longitudinale (26) convergeant de manière que le courant d'air s'y écoule sans décollement,

    (d) afin que le courant d'air aborde la roue-hélice (28) sans tourbillonner, au moins un paralléliseur d'écoulement (56) est agencé dans le canal de mesure (20), en amont de la roue-hélice (28),

    (e) à la portion longitudinale cylindrique (22) du canal de mesure (20) présentant l'embouchure que l'on applique contre l'objet mesuré (24) sont conjugués des moyens pour capter une pression statique y régnant, afin de réguler la différence de pression,

(f) le canal annulaire (18) et le canal de mesure (20) sont accordés l'un à l'autre de manière que la quantité d'air passant par le canal annulaire (18) ainsi que la vitesse d'écoulement de l'air correspondent à peu près à la quantité d'air passant par le canal de mesure (20) ainsi qu'à la vitesse d'écoulement de l'air dans le canal de mesure (20).

2.  Dispositif de contrôle selon revendication 1, caractérisé par le fait que la différence de pression entre la pression statique captée dans ladite portion longitudinale cylindrique (22) du canal de mesure (20) et la pression globale de l'atmosphère environnante est régulée.

3.  Dispositif de contrôle selon revendication 1 ou 2, caractérisé par le fait que la portion longitudinale convergente (26) du canal de mesure (20) est conique, et son angle d'ouverture, mesuré de paroi à paroi, vaut au maximum 18°, de préférence 10° à 15°.

4.  Dispositif de contrôle selon l'une des revendications précédentes, caractérisé par le fait que le rapport de la section droite intérieure libre de la portion longitudinale cylindrique (22) du canal de mesure (20) à la section droite que le canal de mesure (20) possède à la hauteur de la roue-hélice (28) vaut 1,2 à 3,5, de préférence 1,8 à 2,0.

5.  Dispositif de contrôle selon l'une des revendications précédentes, caractérisé par le fait que la portion longitudinale cylindrique (22) du canal de mesure (20) qui présente l'embouchure applicable sur l'objet mesuré (24) est longue d'au moins 20 millimètres.

6.  Dispositif de contrôle selon l'une des revendications précédentes, caractérisé par le fait que la pression statique dans la portion longitudinale cylindrique du canal de mesure (22) qui présente l'embouchure à appliquer contre l'objet mesuré (24) est prélevée au moyen de plusieurs trous (72) dans la paroi de la portion longitudinale (22) du canal de mesure, lesdits trous étant affectés à la même section droite du canal de mesure (20) et débouchant dans un canal collecteur annulaire (74).

7.  Dispositif d contrôle selon l'une des revendications précédentes, caractérisé par le fait que dans la portion longitudinale cylindrique du canal de mesure qui présente l'embouchure à appliquer contre l'objet mesuré (24), il est prévu un paralléliseur d'écoulement (68) qui, dans le cas d'un écoulement d'aspiration, est agencé en amont et, dans le cas d'un écoulement de soufflage, en aval du ou des points où est captée la pression statique dans cette portion longitudinale cylindrique (22).

8.  Dispositif de contrôle selon revendication 8, caractérisé par le fait qu'une portion de paroi (70) du canal annulaire (18), cette portion formant le bord extérieur de l'embouchure du canal annulaire (18), est agencée avec possibilité de déplacement de manière à pouvoir être appliquée complètement contre l'objet mesuré (24), pour obtenir une étanchéité périmétrique, même en cas de positionnement oblique de l'embouchure du canal de mesure (20) par rapport à l'objet mesuré (24).

9.  Dispositif de contrôle selon revendication 8, caractérisé par le fait que le rapport de la section droite intérieure libre de l'embouchure du canal annulaire (18) destinée à être appliquée contre l'objet mesuré (24) à la section droite intérieure libre de l'embouchure correspondante du canal de mesure (20) est supérieur à 0,5, de préférence à 1,0.

10. Dispositif de contrôle selon revendication 8 ou 9, caractérisé par le fait que des cloisons (33) s'étendant axialement et radialement sont agencées dans le canal annulaire (18) qu'elles partagent en canaux longitudinaux, ces cloisons (33), de préférence au nombre de quatre, étant agencées avec un décalage mutuel avec des intervalles angulaires moyens de 90°.

11. Dispositif de contrôle selon revendication 10, caractérisé par le fait que, sur un domaine longitudinal commençant à l'embouchure du canal de mesure (20), ce domaine représentant au moins 10 millimètres de la portion cylindrique longitudinale (22) du canal de mesure (20), l'épaisseur de la paroi périphérique du canal de mesure séparant ce canal de mesure (20) de la ou des régions de passage d'air du canal annulaire (18) vaut au maximum 4 millimètres, de préférence moins de 2 millimètres.

12. Dispositif de contrôle selon l'une des revendications précédentes, caractérisé par le fait que le ventilateur est un ventilateur radial (38).

**13.** Dispositif de contrôle selon revendication 12, caractérisé par le fait que le ventilateur radial (38) présente un ventilateur radial (50) soufflant librement dans une chambre de guidage d'air (40), laquelle (40) provoque la déflexion de l'écoulement d'air en direction axiale, et par le fait qu'en aval de cette chambre de guidage d'air (40) et encore en amont de la roue-hélice (28) de l'anémomètre (30) est agencé au moins un paralléliseur d'écoulement (48) pour provoquer un écoulement d'air irrotationnel.

**14.** Dispositif de contrôle selon revendication 13, caractérisé par le fait que ledit paralléliseur d'écoulement (48) englobe le moteur d'entraînement (44) du ventilateur radial (38) et le porte, de sorte qu'il n'y a, pour le moteur d'entraînement (44), aucune âmesupport perturbant l'écoulement d'air.

**15.** Dispositif de contrôle selon l'une des revendications 8 à 14 précédentes, caractérisé par le fait que le paralléliseur d'écoulement (48) du ventilateur radial (38) est suivi d'un canal d'écoulement (62) se rétrécissant en forme d'entonnoir dans la direction d'écoulement de l'air et étant, sur au moins une portion longitudinale, entouré par un canal annulaire (64) qui peut également être parcouru par de l'air refoulé par le ventilateur radial (38), afin que l'air s'écoulant du ventilateur radial (38) soit fourni selon un partage aussi précis que possible au canal de mesure (20) et au canal annulaire (18) qui l'entoure sur au moins une portion longitudinale.

**16.** Dispositif de contrôle selon l'une des revendications 12 à 15, caractérisé par le fait qu'entre la roue-hélice (28) de l'anémomètre à roue-hélice (30) et le ventilateur radial (38) un paralléliseur d'écoulement (56') est agencé dans le canal de mesure (20), ce paralléliseur d'écoulement (56') étant de préférence précédé, côté amont, par un autre paralléliseur d'écoulement (56) qui est traversé par la totalité de l'air refoulé par le ventilateur radial (38).

**17.** Dispositif de contrôle selon l'une des revendications précédentes, caractérisé par le fait qu'il est réalisé en tant qu'appareil à main.

**18.** Dispositif de contrôle selon l'une des revendications 1 à 11 ou 17, caractérisé par le fait que le canal de mesure (20) et éventuellement le canal annulaire (18) est ou sont suivis d'un ventilateur-aspirateur pour aspirer l'air au travers de l'objet mesuré (24).

**19.** Dispositif de contrôle selon l'une des revendications 8 à 18 précédentes, caractérisé par le fait qu'à l'extrémité inférieure du canal annulaire (18) est fixé un paralléliseur d'écoulement (68'), prévu contre le pourtour intérieur de la portion de paroi de canal (70) formant le bord extérieur de l'embouchure du canal annulaire (18), et ce paralléliseur se termine dans le plan de la surface frontale inférieure (71) de cette portion de paroi de canal (70).

FIG: 1

FIG: 2

EP 0 240 881 B1

# Fig. 3